# EUROPÄISCHE PATENTANMELDUNG

(11) **EP 0 988 795 A1**
(43) Veröffentlichungstag der Anmeldung: **29.03.2000**
(21) Anmeldenummer: 98118207.4
(22) Anmeldetag: 25.09.1998
(51) Int. Cl.: A23L 1/01, A23L 1/32, H05B 6/80

(54) **Verfahren zum Garen von Eiern in einem Mikrowellenheizgerät und Gerät zur Durchführung des Verfahrens**

(71) Anmelder: GNT Gesellschaft für Nahrungsmitteltechnologie mbH, 52072 Aachen (DE)
(72) Erfinder: Hoech, Horst, Dr.-Ing., (DE)
(74) Vertreter: Albrecht, Rainer Harald, Dr.-Ing.

(57) **Zusammenfassung**

Die Erfindung betrifft ein Verfahren zum Garen von Eiern in einem Mikrowellenheizgerät. Das zu garende Ei wird mit Schale in einem Behälter, der aus einem für ultrahochfrequente elektromagnetische Wellen durchlässigen Material besteht und im Heizraum des Mikrowellengerätes angeordnet ist, mit vortemperiertem, heißem Wasser beaufschlagt und gleichzeitig mit ultrahochfrequenten elektromagnetischen Wellen erhitzt. Die Heizleistung des Mikrowellengerätes wird während des Garens stufenweise reduziert. Gegenstand der Erfindung ist ferner ein Mikrowellenheizgerät zur Durchführung des Verfahrens.

## Beschreibung

Die Erfindung betrifft ein Verfahren zum Garen von Eiern in einem Mikrowellenheizgerät sowie ein Gerät zur Durchführung des Verfahrens.

Mikrowellenheizgeräte weisen einen strahlungsabgeschirmten Heizraum, eine Einrichtung zur Erzeugung ultrahochfrequenter elektromagnetischer Wellen sowie einen Vorwahlschalter zur Steuerung der abgegebenen Heizleistung auf. Ultrahochfrequente Wellen, die auch als Mikrowellen bezeichnet werden, meint im Rahmen der Erfinder elektromagnetische Wellen in einem Frequenzbereich zwischen 10³ und 10⁴ MHz. Mikrowellenheizgeräte werden als Haushaltsgeräte zum schnellen Erhitzen von Lebensmitteln, z. B. zum Erhitzen von Suppen, zum Garmachen von Fleisch, zum Auftauen von Lebensmitteln und dergleichen verwendet.

Im Handel ist Zubehör erhältlich, mit dem Eier in Mikrowellenheizgeräten erhitzt werden können. Bekannt sind Aufnahmebehälter für ein Ei, die aus einer mit Aluminium ausgekleideten Kunststoffkappe und einem Kunststoffunterteil mit Aluminiumeinsatz bestehen. Die Kappe ist fest mit dem Aluminium verbunden, alle anderen Teile lassen sich trennen. In das Kunststoffunterteil wird Wasser eingefüllt. Anschließend wird das zu garende Ei in den Aluminiumeinsatz eingelegt und der Behälter geschlossen. Im geschlossenen Behälter wird das Ei im Mikrowellenheizgerät bei einer Mikrowellenleistung zwischen 350 und 500 Watt erhitzt, wobei Garzeiten zwischen 7 und 10 Minuten erforderlich sind Das Ei ist durch den Aluminiumeinsatz gegen Mikrowellen abgeschirmt. Die Erhitzung des Eies beruht darauf, daß das in den Behälter eingefüllte Wasser durch Mikrowellenerhitzung verdampft und der Aluminiumeinsatz aufgeheizt wird. Die Erhitzung des Eies erfolgt durch Wärmeleitung. Kurze Garzeiten sind nicht erreichbar.

Als Zubehör für Mikrowellengeräte sind ferner Kunststoffbehälter ohne Aluminiumauskleidung bekannt, die zum Eierkochen einsetzbar sein sollen. Zwar sind kurze Garzeiten erreichbar, doch kann das Ei nicht mit Schale gegart werden, sondern muß aufgeschlagen und ohne Schale in den Behälter eingefüllt werden. Das gegarte Ei ist aus dem Behälter auslöffelbar.

Im Rahmen der herrschenden Lehre ist es nicht möglich, rohe Eier mit Schale durch eine Mikrowellenerhitzung, bei der das Ei ultrahochfrequenten Wellen ausgesetzt ist, zu garen. Eier, die als gekochte Frühstückseier verzehrt werden, müssen im Wasserbad oder mit Wasserdampf erhitzt werden, wobei verhältnismäßig lange Garzeiten erforderlich sind.

Der Erfindung liegt die Aufgabe zugrunde, ein Verfahren sowie eine Vorrichtung anzugeben, mit der Hühnereier in einer möglichst kurzen Garzeit zu weich oder hart gekochten Frühstückseiern gegart werden können.

Gegenstand der Erfindung und Lösung dieser Aufgabe ist ein Verfahren zum Garen von Eiern in einem Mikrowellenheizgerät, bei dem zumindest ein rohes Ei mit Schale in einem Behälter, der aus einem für ultrahochfrequente elektromagnetische Wellen durchlässigen Material besteht und im Heizraum des Mikrowellengerätes angeordnet ist, mit vortemperiertem heißen Wasser beaufschlagt und gleichzeitig mit ultrahochfrequenten elektromagnetischen Wellen erhitzt wird, wobei die Heizleistung des Mikrowellengerätes während des Garens stufenweise reduziert wird. Unter ultrahochfrequenten Wellen, im folgenden auch als Mikrowellen bezeichnet, werden elektromagnetische Wellen im Frequenzbereich zwischen 10³ und 10⁴ MHz verstanden.

Das erfindungsgemäße Verfahren ist ein Hybridverfahren, bei dem das zu garende Ei gleichzeitig eine Mikrowellenerhitzung sowie eine Erwärmung durch Wärmeleitung erfährt. Die Mikrowellen bewirken eine schnelle gleichmäßige Erwärmung des Eies. Durch zusätzliche Beaufschlagung mit heißem Wasser stellt sich ein Temperaturprofil mit einem Temperaturgradienten von innen nach außen ein. Das Eiweiß wird stärker erwärmt als das Eigelb im Kern des Eies und erfährt eine frühzeitige Festigung. Im Vergleich zu herkömmlichen Garverfahren, bei denen das Ei im Wasserbad oder mit Dampf erhitzt wird, verschiebt sich durch die zusätzliche Mikrowellenerhitzung das Temperaturniveau insgesamt rasch nach oben, so daß kürzere Garzeiten erreichbar sind. Ein Platzen des Eies während des Garvorganges wird erfindungsgemäß dadurch verhindert, daß die Heizleistung des Mikrowellengerätes während des Garens stufenweise reduziert wird. Vorzugsweise wird die Heizleistung des Mikrowellenheizgerätes nach einer Garzeit von weniger als einer Minute von einer hohen Anfangsheizleistung auf eine niedrige Endleistung reduziert, die während der verbleibenden Garzeit konstant beibehalten wird. Zweckmäßig ist eine Anfangsheizleistung von mehr als 500 Watt und eine Umschaltung auf eine Endleistung von weniger als 300 Watt.

Die Wasserbeaufschlagung des Eies während des Garverfahrens kann auf unterschiedliche Weise erfolgen. Im Rahmen der Erfindung liegt es, daß das Ei in ein Wasserbad eingetaucht wird. Ferner kann das Ei von heißem Wasser überströmt werden, welches aus einem temperierten Vorratsbehälter zugeführt wird.

Gegenstand der Erfindung ist ferner ein Mikrowellengerät zur Durchführung des beschriebenen Verfahrens mit einem strahlungsabgeschirmten Heizraum, einer Einrichtung zur Erzeugung ultrahochfrequenter elektromagnetischer Wellen sowie einer Einrichtung zur Steuerung der Heizleistung der elektromagnetischen Wellen, wobei ein wasserdichter Aufnahmebehälter aus einem für ultrahochfrequente, elektromagnetische Wellen durchlässigen Material zur Aufnahme mindestens eines Eies innerhalb des Heizraumes angeordnet ist und wobei die Einrichtung zur Steuerung der Heizleistung mit einer Steuerelektronik ausgerüstet ist, welche die Heizleistung mit zunehmender Garzeit stufenweise reduziert.

Im Rahmen der Erfindung liegt es, universell im Haushalt zur Zubereitung von Speisen einsetzbare Mikrowellengeräte mit einer Zusatzeinrichtung zur Steuerung der Heizleistung entsprechend der erfindungsgemäßen Lehre auszurüsten, wobei die Zusatzeinrichtung durch ein Funktioneschalter aktivierbar ist. Der Aufnahmebehälter ist bei dieser Ausführung ein separates Zubehörteil und wird mit Wasser gefüllt, wenn das Mikrowellengerät zum Garen von Eiern eingesetzt werden soll. Der Aufnahmebehälter kann mit einer elektrischen Schnellheizung für das Wasserbad ausgerüstet sein. Im Rahmen der Erfindung liegt es auch, daß der Heizraum eine elektrisch beheizte Standfläche für den Behälter aufweist, wobei durch die elektrische Bodenbeheizung der Standfläche das Wasser im Aufnahmebehälter auf Siedetemperatur aufheizbar ist.

Eine andere Ausführung der Erfindung sieht vor, daß der Aufnahmebehälter mit einer Wasserzuführleitung an einen Wasservorratstank angeschlossen ist, der mit einer thermostatgeregelten Elektroheizung ausgerüstet ist. Diese Ausführung bietet sich insbesondere an, wenn das Mikrowellenheizgerät als Einzweckgerät ausschließlich zum Garen von Eiern verwendet werden soll. Die Wasserzuführung kann einen Wasserverteiler für eine oberseitige Wasseraufgabe auf das zu garende Ei aufweisen, wobei das aufgegebene Wasser das Ei überströmt und durch einen Abfluß am Boden des Aufnahmebehälters abfließt. Alternativ kann an den Aufnahmebehälter auch ein Wasserüberlauf angeschlossen sein, so daß der Aufnahmebehälter ein Wasserbad enthält, in welches das zu gärende Ei eintaucht. Bei der Ausführung als Einzweckgerät sind der strahlungsabgeschirmter Heizraum, der Wasservorratstank sowie ein Sammelbehälter für abfließendes Wasser zweckmäßig in einem Gerätegehäuse integriert.

Im folgenden wird die Erfindung anhand einer lediglich ein Ausführungsbeispiel darstellenden Zeichnung erläutert. Es zeigen schematisch
- Fig. 1: ein zum Garen von Eiern eingesetztes, erfindungsgemäßes Mikrowellengerät,
- Fig. 2: eine weitere Ausführung des erfindungsgemäßen Mikrowellengerätes.

Das in den Figuren dargestellte Mikrowellenheizgerät weist in an sich bekannter Weise einen strahlungsabgeschirmten Heizraum 1 sowie eine Einrichtung zur Erzeugung ultrahochfrequenter elektromagnetischer Wellen auf. Die Garzeit ist durch ein Drehschalter 2 einstellbar. Ferner ist ein Ein-/Ausschalter 3 vorgesehen.

Innerhalb des Heizraumes 1 ist ein wasserdichter Aufnahmebehälter 4 aus einem für ultrahochfrequente elektromagnetische Wellen durchlässigen Material für ein oder mehrere Eier 5 vorgesehen. Während der Garzeit wird die durch die elektromagnetischen Wellen abgegebene Heizleistung stufenweise reduziert. Die Leistungsschaltung ist zeitgesteuert und mit den modernen Mitteln der Elektronik realisiert.

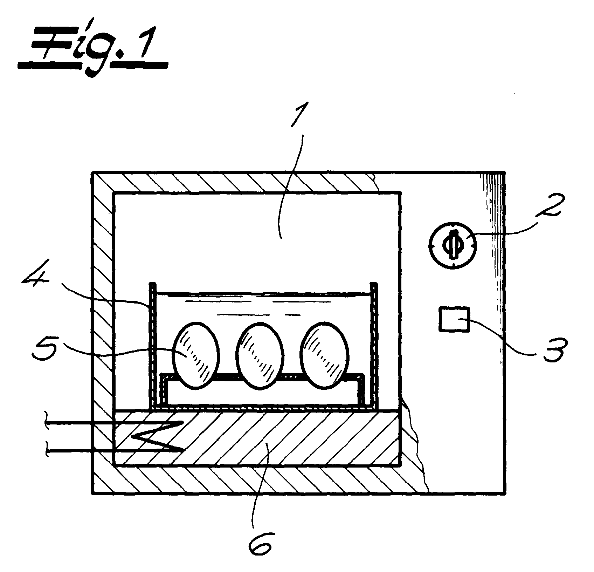

Bei der in Fig. 1 dargestellten Ausführung weist der Heizraum 1 des Mikrowellenheizgerätes eine elektrisch beheizte Standfläche 6 für den Aufnahmebehälter 4 auf. Durch die elektrische Bodenbeheizung der Standfläche 6 ist das Wasser im Aufnahmebehälter 4 auf Siedetemperatur aufheizbar.

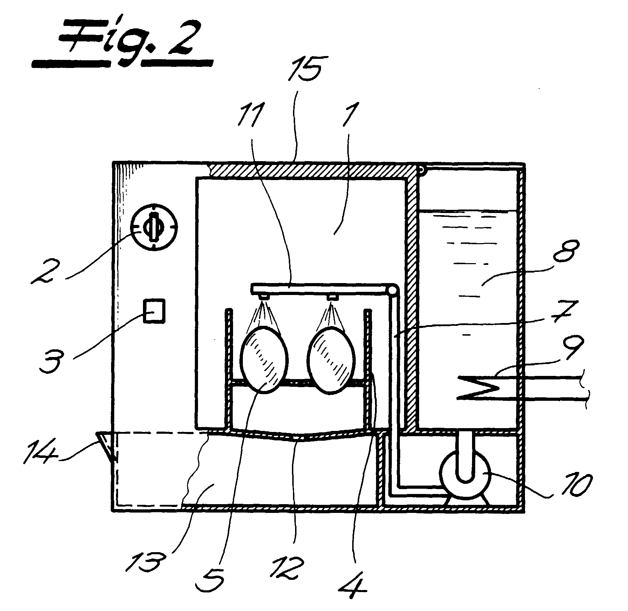

Bei der in Fig. 2 dargestellten Ausführung ist der Aufnahmebehälter 4 mit einer Wasserzuführleitung 7 an einen Wasservorratstank 8 angeschlossen, der mit einer thermostatgeregelten Elektroheizung 9 ausgerüstet ist. Die Wassertemperatur im Wasservorratstank 8 wird auf einer Temperatur knapp unterhalb der Siedetemperatur vorgehalten. Das heiße Wasser wird mittels einer Pumpe 10 einem Wasserverteiler 11 oberhalb der zu garenden Eier 5 zugeführt. Das aufgegebene Wasser überströmt die Eier 5 und fließt durch einen Abfluß 12 am Boden des Aufnahmebehälters 4 in einen Sammelbehälter 13 ab, der mit einem Ausguß 14 versehen ist. Der strahlungsabgeschirmte Heizraum 1, der Wasservorratstank 8 und der Sammelbehälter 13 für abfließendes Wasser sind in einem Gerätegehäuse 15 integriert.

Erfindungsgemäß werden die zu garenden Eier mit vortemperiertem, heißem Wasser beaufschlagt und gleichzeitig mit ultrahochfrequenten elektromagnetischen Wellen erhitzt, wobei die Heizleistung des Mikrowellengerätes während des Garens stufenweise reduziert wird. Die Reduzierung der Heizleistung kann in mehrere Stufen erfolgen. Vorzugsweise wird die Heizleistung des Mikrowellenheizgerätes jedoch nach einer Garzeit von weniger als einer Minute von einer hohen Anfangsheizleistung auf eine niedrige Endleistung reduziert, die dann während der verbleibenden Garzeit konstant beibehalten wird. Als zweckmäßig erweist sich eine Anfangsheizleistung von mehr als 500 Watt und eine Umschaltung auf eine Endleistung auf weniger als 300 Watt.

### Beispiel:

In einem handelsüblichen Mikrowellenheizgerät (Miele M316 E, maximale Heizleistung 750 Watt) wurde ein Hühnerei nach dem erfindungsgemäßen Verfahren gegart. Ein Glas (250 ml Inhalt) mit einem auf 90° C vortemperiertem Wasserbad wurde im Heizraum des Mikrowellengerätes positioniert. Das zu garende Ei wurde in das Wasserbad eingetaucht. Anschließend wurde das Mikrowellengerät eingeschaltet und mit einer Anfangsheizleistung von 550 Watt betrieben. Nach 40 Sekunden wurde die Heizleistung auf 200 Watt reduziert. Die reduzierte Heizleistung wurde 70 Sekunden beibehalten. Nach einer Garzeit von insgesamt 110 Sekunden wurde das Ei entnommen. Die Schale war unbeschädigt. Das Ei hatte ein stichfeste Hülle aus Eiweiß und besaß einen heißen, noch weitgehend unverfestigten Kern aus Eigelb.

## Patentansprüche

1. Verfahren zum Garen von Eiern in einem Mikrowellenheizgerät, bei dem zumindest ein rohes Ei mit Schale in einem Behälter, der aus einem für ultrahochfrequente elektromagnetische Wellen durchlässigen Material besteht und im Heizraum des Mikrowellengerätes angeordnet ist, mit vortemperiertem, heißem Wasser beaufschlagt und gleichzeitig mit ultrahochfrequenten elektromagnetischen Wellen erhitzt wird, wobei die Heizleistung des Mikrowellengerätes während des Garens stufenweise reduziert wird.

2. Verfahren nach Anspruch 1, wobei die Heizleistung des Mikrowellenheizgerätes nach einer Garzeit von weniger als einer 1 Minute von einer hohen Anfangsheizleistung auf eine niedrige Endleistung reduziert wird, die während der verbleibenden Garzeit konstant beibehalten wird.

3. Verfahren nach Anspruch 2, wobei eine Anfangsheizleistung von mehr als 500 Watt eingestellt wird und eine Umschaltung auf eine Endleistung von weniger als 300 Watt erfolgt.

4. Verfahren nach einem der Ansprüche 1 bis 3, wobei das Ei in ein Wasserbad eingetaucht wird.

5. Verfahren nach einem der Ansprüche 1 bis 3, wobei das Ei von heißem Wasser überströmt wird, welches aus einem temperierten Vorratsbehälter zugeführt wird.

6. Mikrowellenheizgerät zur Durchführung des Verfahrens nach einem der Ansprüche 1 bis 5, mit
einem strahlungsabgeschirmten Heizraum,
einer Einrichtung zur Erzeugung ultrahochfrequenter elektromagnetischer Wellen und
einer Einrichtung zur Steuerung der Heizleistung der elektromagnetischen Wellen,
**dadurch gekennzeichnet**, daß ein wasserdichter Aufnahmebehälter (4) aus einem für ultrahochfrequente elektromagnetische Wellen durchlässigen Material zur Aufnahme mindestens eines Eies (5) innerhalb des Heizraums (1) angeordnet ist und daß die Einrichtung zur Steuerung der Heizleistung mit einer Steuerelektronik ausgerüstet ist, welche die Heizleistung mit zunehmender Garzeit stufenweise reduziert.

7. Mikrowellenheizgerät nach Anspruch 6, dadurch gekennzeichnet, daß der Aufnahmebehälter (4) mit einer Wasserzuführleitung (7) an einen Wasservorratstank (8) angeschlossen ist, der mit einer thermostatgeregelten Elektroheizung (9) ausgerüstet ist.

8. Mikrowellenheizgerät nach Anspruch 7, dadurch gekennzeichnet, daß die Wasserzuführleitung (7) einen Wasserverteiler (11) für eine oberseitige Wasseraufgabe auf das zu garende Ei (5) aufweist, wobei das aufgegebene Wasser das Ei (5) überströmt und durch einen Abfluß (12) am Boden des Aufnahmebehälters (4) abfließt.

9. Mikrowellenheizgerät nach Anspruch 7, dadurch gekennzeichnet, daß an den Aufnahmebehälter (4) ein Wasserüberlauf angeschlossen ist und der Aufnahmebehälter (4) ein Wasserbad enthält, in welches das zu garende Ei eintaucht.

10. Mikrowellenheizgerät nach Anspruch 7 oder 8, dadurch gekennzeichnet, daß der strahlungsabgeschirmte Heizraum (1), der Wasservorratstank (8) und ein Sammelbehälter (13) für abfließendes Wasser in einem Gerätegehäuse (14) integriert sind.

11. Mikrowellenheizgerät nach Anspruch 6, dadurch gekennzeichnet, daß der Heizraum (1) eine elektrisch beheizte Standfläche (6) für den Aufnahmebehälter (4) aufweist, wobei durch die elektrische Bodenheizung der Standfläche (6) das Wasser im Aufnahmebehälter (4) auf Siedetemperatur aufheizbar ist.
